# EUROPEAN PATENT APPLICATION

(11) **EP 3 441 890 A1**
(43) Date of publication of application: **13.02.2019**
(21) Application number: 17792430.5
(22) Date of filing: 25.04.2017
(51) Int. Cl.: G06F 17/30

(54) **TRANSACTION RECOVERY METHOD IN DATABASE SYSTEM AND DATABASE MANAGEMENT SYSTEM**

(30) Priority: 06.05.2016 CN 201610300319
(71) Applicant: Huawei Technologies Co., Ltd., Longgang District Shenzhen, Guangdong 518129 (CN)
(72) Inventor: MENG, Xiaofeng, Beijing 100872 (CN); SUN, Dongwang, Shenzhen, Guangdong 518129 (CN)
(74) Representative: Gill Jennings & Every LLP
(86) International application number: PCT/CN2017/081819
(87) International publication number: WO 2017/190604

(57) **Abstract**

The present application discloses a transaction recovery method in a database system and a database management system, where a storage device of the database system supports copy on write. The method includes: determining a to-be-recovered transaction in the database system, where the to-be-recovered transaction is not committed, and the to-be-recovered transaction has performed an update operation on data in the database system; obtaining, from an update operation log used to record the update operation that is performed on the data by the to-be-recovered transaction, a physical address of an old value of the data in the storage device, where the old value is a value of the data before the update operation; and replacing a physical address of a new value of the data with the physical address of the old value, and setting the physical address of the new value to invalid, so that a logical address of the data points to the physical address of the old value, where the new value is a value of the data after the update operation. In comparison with a conventional technology, in the present application, write operations can be effectively reduced during transaction recovery. Erase operations on the storage device are further reduced, thereby prolonging a lifetime of the storage device.

## Description

The present application claims priority to Chinese Patent Application No. 201610300319.5, filed with the Chinese Patent Office on May 6, 2016, and entitled "TRANSACTION RECOVERY METHOD IN DATABASE SYSTEM, AND DATABASE MANAGEMENT SYSTEM", which is incorporated herein by reference in its entirety.

### TECHNICAL FIELD

The present application relates to the field of database technologies, and more specifically, to a transaction recovery method in a database system, and a database management system.

### BACKGROUND

A transaction (Transaction) is a sequence of database operations defined by a user in a database system. These operations are either all executed or none executed, and are an inseparable work unit. For example, in a relational database, a transaction may be a structured query language (Structured Query Language, SQL) statement, a group of SQL statements, or a whole program. In an SQL, there are three statements for defining a transaction: BEGIN TRANSACTION (BEGIN TRANSACTION), COMMIT (COMMIT), and ROLLBACK (ROLLBACK).

A transaction generally starts with BEGIN TRANSACTION and ends with COMMIT or ROLLBACK. COMMIT means a commit, that is, committing all operations of the transaction, and specifically, means that all updates to a database in the transaction are written into a disk and the transaction ends normally. ROLLBACK means a rollback. That is, if a fault occurs in a transaction execution process, and a transaction cannot continue to be executed, the system undoes (UNDO) all completed operations of the transaction on the database, to roll back to a state when the transaction begins.

A transaction has four characteristics: atomicity (Atomic), consistency (Consistency), isolation (Isolation), and durability (Durability). Atomicity means that a transaction is a logical work unit of a database, and a sequence of operations included in a transaction is either all performed or none performed. Consistency means that a transaction execution result needs to be that a database changes from a consistent state to another consistent state. When the database includes only a result indicating that a transaction is successfully committed, it indicates that the database is in a consistent state. If a fault occurs during running of a database system, and some transactions are forcibly interrupted before being completed, some modifications made to the database by these uncompleted transactions are written into a disk. In this case, the database is in an incorrect state, or in an inconsistent state. Isolation means that execution of a transaction cannot be interrupted by another transaction. Durability means that once a transaction is committed (COMMIT), a modification made to data in a database by the transaction should be durable, and another subsequent operation or a fault should have no impact on an execution result of the transaction. These four characteristics are referred to as ACID characteristics for short.

A database management system (database management system, DBMS) is responsible for transaction processing. An important task of the DBMS is to ensure ACID characteristics of a transaction. Once the ACID characteristics of the transaction are damaged, that is, a database enters an error state, the DBMS needs to have a function of recovering the database from the error state to a correct state (or referred to as a consistent state). This process is database recovery.

A log file plays a very important role in database recovery. A log file is a file used to record an update operation of a transaction on the database, and may also be referred to as a transaction log. Content that needs to be logged in a log file includes a transaction start (BEGIN TRANSACTION) flag, a transaction end (COMMIT or ROLLBACK) flag, and all update operations of a transaction. Specifically, the update operation of the transaction on the database includes an insertion operation, a deletion operation, or a modification operation. A start flag, an end flag, and each update flag of the transaction are all recorded as a log record (Log Record) in the log file. Content of each log record mainly includes a transaction identifier (which identifies a transaction), an old value of pre-update data (for an insertion operation, this item is a null item), and a new value of post-update data (for a deletion operation, this item is a null item).

To ensure that the database is recoverable, log file logging needs to follow a "write-ahead logging" (Write-Ahead Logging, WAL) principle: A sequence of log records of transactions needs to be in strict accordance with a transaction execution time sequence; and a log file needs to be written into a disk before updated data is written into the disk.

When a transaction fault or a system fault occurs in a running process of a database system, a DBMS restores, by using a log file, a database to a consistent state before the fault occurs.

The transaction fault means that a transaction is terminated before the transaction runs to a normal end point. In this case, the log file is used to undo (UNDO) an update made by the transaction to the database, to recover the database. Basic steps of the undoing (UNDO) processing are as follows: (1) Perform reverse scanning on the log file (that is, scan the log file backward starting from the end), to search for an update operation of the transaction. (2) Perform a reverse operation on the update operation of the transaction, that is, write an "old value of pre-update data" in the log record into a physical database (that is, the disk). It should be understood that if the update operation in the log record is an insertion operation, the reverse operation is equivalent to a deletion operation, because the "old value of the pre-update data" is null; if the update operation in the log record is a deletion operation, the reverse operation is equivalent to an insertion operation; if the update operation in the log record is a modification operation, the reverse operation is equivalent to replacing a "new value of post-update data" with the "old value of the pre-update data". (3) Continue to perform reverse scanning on the log file, to search for an update operation of the transaction, and repeat the processing in step (2), until a start flag (BEGIN TRANSACTION) of the transaction is scanned. Then, failure recovery of the transaction is completed.

A system fault causes an inconsistent state of a database due to two reasons: One is that before the fault occurs, an update made by an uncompleted transaction to the database may be already written into a disk; the other is that before the fault occurs, an update made by a committed transaction to the database may still reside in a buffer and has not been written into the disk yet. Therefore, a recovery operation for the system fault is undoing a transaction that has not been completed when the fault occurs and redoing a transaction that has been completed. Steps of recovering the system fault are generally as follows: (1) Perform forward scanning on a log file (that is, scan the log file starting from the beginning); find transactions that have been committed before the fault occurs (the transactions have both a BEGIN TRANSACTION log record and a COMMIT log record), and record transaction identifiers of the transactions in a redo (REDO) queue; and find transactions that have not been completed before the fault occurs (the transactions have only a BEGIN TRANSACTION log record and have no corresponding COMMIT log record), and record transaction identifiers of the transactions in an undo (UNDO) queue. (2) Undo (UNDO) the transactions in the undo queue. Similar to the steps for transaction failure recovery, perform reverse scanning on the log file, and perform a reverse operation on an update operation of each UNDO transaction. That is, write an "old value of pre-update data" in a log record of the UNDO transaction into the disk. (3) Redo (REDO) the transactions in the redo queue. Perform forward scanning on the log file, and re-execute an operation logged in the log file for each REDO transaction, that is, write a "new value of post-update data" in a log record into the disk.

Data in a database is stored in a storage device (for example, a disk) of a database system. Running of the database system depends on read and write operations on the storage device. A solid state disk (Solid State Disk, SSD) that uses a flash memory as a storage medium is a new storage device. The flash memory has no mechanical parts such as a magnetic head, and overheads of the flash memory in random access mode are equivalent to overheads of the flash memory in sequential access mode. Therefore, the SSD is more advantageous than a conventional disk in terms of performance. In the prior art, the SSD is also expected to be used as a storage device of a database system.

An SSD needs to be erased before data can be rewritten. In addition, a lifetime of the SSD is calculated according to a quantity of erase times. Therefore, current SSDs all support a copy on write (Copy On Write, COW) characteristic. That is, when data stored in an SSD needs to be updated, a new value of the data is written into free storage space, and is not written into an original location of an old value of the data after the old value of the data is erased.

Using the SSD as a storage device of a database system can improve data storage performance of the database system. However, because of a copy on write characteristic of the SSD, a transaction undo (UNDO) operation in the prior art generates an unnecessary write operation. For example, in a database recovery process, performing undo (UNDO) processing on a transaction is equivalent to performing a reverse operation on an update operation of the transaction, that is, writing an "old value of pre-update data" in a log record into the disk. Because of the copy on write characteristic of the SSD, the "old value of the pre-update data" is written into free storage space in a process of performing the undo (UNDO) processing on the transaction. However, the "old value of the pre-update data" may be still stored in a piece of storage space when the transaction is recovered. For example, if an update operation of a transaction on the database is a modification operation, before the transaction performs the update operation on the database, an "old value of pre-update data" is stored in a piece of storage space. It is assumed that a transaction fault occurs and an update made by the transaction to the database needs to be undone (UNDO) by using a log file, and that the transaction has updated data to a new value. This is equivalent to performing a reverse operation on the update operation of the transaction, to write an "old value of pre-update data" in a log record into the disk, that is, write the "old value of the pre-update data" into free storage space. In this case, the same "old value of pre-update data" occupies two pieces of storage space. It can be considered that the transaction undo (UNDO) processing generates an extra and unnecessary write operation. This is undesired in the SSD, because when undo (UNDO) processing needs to be performed on many transactions, a large quantity of extra and unnecessary write operations may be generated in the SSD. These extra write operations may cause some unnecessary erase operations, shortening the lifetime of the SSD.

It may be learned from the above that when the storage device supporting the copy on write (Copy On Write, COW) characteristic, such as an SSD, is used as the storage device of the database system, an unnecessary write operation is generated during transaction recovery. This further causes an unnecessary erase operation, affecting a lifetime of the storage device.

### SUMMARY

The present application provides a transaction recovery method in a database system and a database management system, so as to effectively reduce write operations during transaction recovery, thereby reducing abrasion of a storage device of the database system, and prolonging a lifetime of the storage device.

According to a first aspect, a transaction recovery method in a database system is provided, where a storage device of the database system supports a copy on write characteristic, and the method includes: determining a to-be-recovered transaction in the database system, where the to-be-recovered transaction is not committed, and the to-be-recovered transaction has performed an update operation on data in the database system; obtaining, from an update operation log used to record the update operation that is performed on the data by the to-be-recovered transaction, a physical address of an old value of the data in the storage device, where the old value is a value of the data before the update operation; and replacing a physical address of a new value of the data in the storage device with the physical address of the old value in the storage device, and setting the physical address of the new value in the storage device to invalid, so that a logical address of the data points to the physical address of the old value in the storage device, where the new value is a value of the data after the update operation.

In this embodiment of the present invention, the physical address of the new value of the data is replaced with the physical address of the old value of the data during transaction recovery, so that the logical address of the data points to the physical address of the old value of the data. In this way, the data is restored to the old value, that is, transaction recovery is implemented. In comparison with a conventional technology, in this embodiment of the present invention, write operations can be effectively reduced during transaction recovery. If the storage device is an SSD, erase operations on the SSD can further be reduced, thereby prolonging a lifetime of the SSD. In addition, transaction recovery efficiency can further be effectively improved because write operations are reduced.

With reference to the first aspect, in a first possible implementation of the first aspect, before the determining a to-be-recovered transaction in the database system, the method further includes: generating the update operation log according to the update operation that is performed on the data by the to-be-recovered transaction, where the update operation log includes a transaction identifier, an operation object, and a historical address, the transaction identifier is used to indicate the to-be-recovered transaction, the operation object is used to indicate the data operated by the to-be-recovered transaction, and the historical address is used to indicate the physical address of the old value in the storage device; and before the new value is written into the storage device, writing the update operation log into the storage device.

In this embodiment of the present invention, the physical address of the old value of the data in the storage device is recorded in a log record that records the update operation that is performed on the data by the transaction. During transaction recovery, the physical address of the new value of the data in the storage device is replaced with the physical address of the old value of the data according to the log record, to restore the data in a database to a state before the transaction is executed, that is, transaction recovery is implemented. In comparison with a conventional technology, in this embodiment of the present invention, write operations can be effectively reduced during transaction recovery. If the storage device is an SSD, erase operations on the SSD can further be reduced, thereby prolonging a lifetime of the SSD. In addition, transaction recovery efficiency can further be effectively improved because write operations are reduced.

With reference to the first aspect or the first possible implementation of the first aspect, in a second possible implementation of the first aspect, the storage device is a solid state disk that uses a flash memory as a storage medium, and a mapping table that is between a logical address LBA and a physical address PBA and that is of a flash translation layer of the storage device stores the physical address of the old value in the storage device.

With reference to the first aspect or the first or second possible implementation of the first aspect, in a third possible implementation of the first aspect, the update operation is an insertion operation, and the old value and the physical address of the old value in the storage device are null values; or the update operation is a deletion operation, and the new value and the physical address of the new value in the storage device are null values.

In the foregoing implementations, the storage device of the database system is a hard disk or a magnetic disk, rather than a memory.

In the foregoing implementations, the storage device of the database system is a storage device supporting a copy on write characteristic, including but not limited to a solid state disk (SSD), a file system, or the like. In some descriptions in this specification, data or a log record is written into a disk, where the disk corresponds to the storage device.

In the foregoing implementations, the update operation of the transaction includes the following operations:
(1) a modification operation, which means that the transaction modifies the data originally existing in the database, so as to change the old value of the data to the new value, where in this case, the old value and the new value of the data are both actual data values, and the old value and the new value both have corresponding physical addresses in the storage device of the database system;
(2) an insertion operation, which means that the transaction inserts the data into the database, where in this case, the old value of the data and the physical address of the old value are both null values, and therefore in a log record of the insertion operation, an entry used to record the physical address of the old value of the data is a null entry; and
(3) a deletion operation, which means that the transaction deletes the data from the database, where in this case, the new value of the data and the physical address of the new value are both null values.

According to a second aspect, a database management system is provided, where a storage device of a database system to which the database management system belongs supports a copy on write characteristic, and the database management system is configured to perform the method in the first aspect or a possible implementation of any aspect of the first aspect.

Specifically, the database management system may include a module configured to perform the method in the first aspect or any possible implementation of the first aspect.

According to a third aspect, a database management system is provided, where a storage device of a database system to which the database management system belongs supports a copy on write characteristic, the database management system includes a memory (Memory) and a processor, the memory is configured to store instructions, the processor is configured to execute the instructions stored in the memory, and by executing the instructions stored in the memory, the processor performs the method in the first aspect or a possible implementation of any aspect of the first aspect.

Based on the foregoing technical solutions, in the embodiments of the present invention, the physical address of the new value of the data is replaced with the physical address of the old value of the data during transaction recovery, so that the logical address of the data points to the physical address of the old value of the data. In this way, the data is restored to the old value, that is, transaction recovery is implemented. In comparison with a conventional technology, in the embodiments of the present invention, write operations can be effectively reduced during transaction recovery. If the storage device is an SSD, erase operations on the SSD can further be reduced, thereby prolonging a lifetime of the SSD. In addition, transaction recovery efficiency can further be effectively improved because write operations are reduced.

### BRIEF DESCRIPTION OF DRAWINGS

FIG. 1 is a schematic diagram of a database system according to an embodiment of the present invention;
FIG. 2 is another schematic diagram of a database system according to an embodiment of the present invention;
FIG. 3 is still another schematic diagram of a database system according to an embodiment of the present invention;
FIG. 4 is a schematic flowchart of a transaction recovery method in a database system according to an embodiment of the present invention;
FIG. 5 is a schematic flowchart of a transaction log generation method according to an embodiment of the present invention;
FIG. 6 is a schematic flowchart of a transaction log reclaiming method according to an embodiment of the present invention;
FIG. 7 is a schematic diagram of an experiment result of performing transaction recovery according to a method provided in an embodiment of the present invention;
FIG. 8 is another schematic diagram of an experiment result of performing transaction recovery according to a method provided in an embodiment of the present invention;
FIG. 9 is a schematic block diagram of a database management system according to an embodiment of the present invention;
FIG. 10 is another schematic block diagram of a database management system according to an embodiment of the present invention; and
FIG. 11 is still another schematic block diagram of a database management system according to an embodiment of the present invention.

### DESCRIPTION OF EMBODIMENTS

The following describes the technical solutions of the present application with reference to the accompanying drawings.

A transaction recovery method in a database system and a database management system in the embodiments of the present invention may be applied to a standalone, cluster, or dual-host backup database system, or the like. The database system (Database System) is a relatively ideal data processing system developed to meet a data processing requirement. The database system generally includes the following three parts: (1) a database (database, DB) that is a set of organized and sharable data that is stored in a computer for a long time, where the data in the database is organized, described, and stored according to a specific mathematical model, has relatively little redundancy, relatively high data independence, and easy scalability, and can be shared among various users; (2) hardware, including a storage device required for storing the data, for example, a memory and/or a disk; and (3) software, including a database management system (database management system, DBMS), where the DBMS is core software of the database system, and is system software used to scientifically organize and store data and efficiently obtain and maintain data, and a database engine is key component of the DBMS.

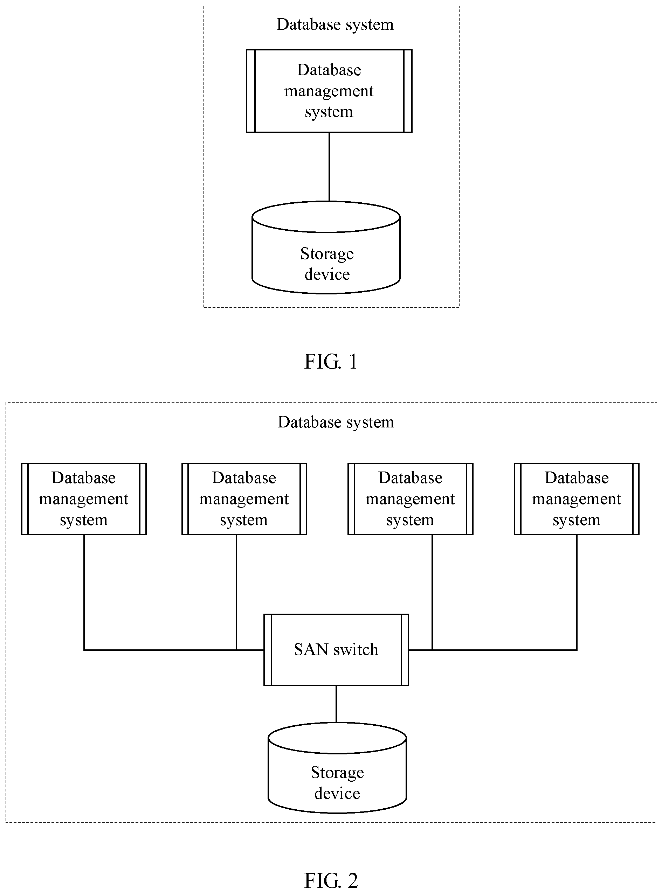

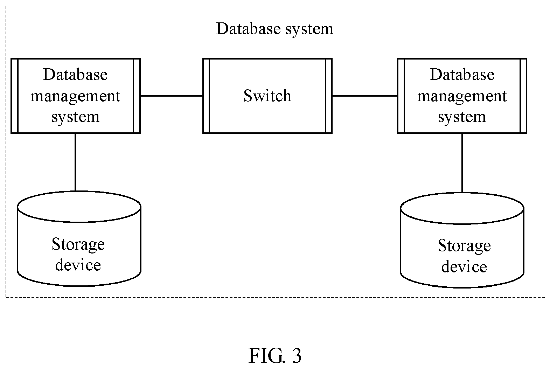

Specifically, FIG. 1 is a schematic diagram of a standalone database system. The standalone database system includes a database management system and a storage device. The database management system is configured to provide services such as database query and modification. The database management system stores data to the storage device. FIG. 2 is a schematic diagram of a cluster database system. The cluster database system includes multiple database management systems that separately provide a user with services such as database query and modification. The multiple database management systems store shared data in a storage device, and perform read and write operations on the data in the storage device by using a storage area network (Storage Area Network, SAN) switch. FIG. 3 is a schematic diagram of a dual-host backup database system. The dual-host backup database system includes two database management systems. One is an active host, and the other is a standby host. The active host and the standby host are connected by using a switch, and store data to their respective corresponding storage devices. In addition, the data stored in the active host and the standby host is synchronized, so that recovery can be performed according to the data stored in the standby host when the active host becomes faulty. No database is shown in FIG. 1, FIG. 2, and FIG. 3. It should be understood that a database is stored in the storage device.

In the embodiments of the present invention, the storage device of the database system is a storage device supporting a copy on write (COW) characteristic, including but not limited to a solid state disk (SSD), a file system, or the like.

For ease of understanding and description, by way of example but not limitation, the following provides description by using an example in which the storage device of the database system is an SSD. However, a person skilled in the art should clearly understand, according to the teachings in the embodiments of the present invention, that the method in the embodiments of the present invention may also be applied to a scenario in which the storage device of the database system is another storage device (such as a file system) supporting a copy on write (COW) characteristic, and such an application shall fall within the protection scope of the present application.

To help understand the embodiments of the present invention, the following describes the copy on write (COW) characteristic with reference to Table 1 by using an example in which the SSD uses a flash memory as a storage medium.

An LBA in Table 1 is a logical block address (Logical Block Address) and is a general mechanism for describing a block at which data is located in an SSD. The LBA may also be referred to as a logical address for short, such as a page page 0 shown in Table 1. A PBA in Table 1 is a physical block address (Physical Block Address) and may also be referred to as a physical address for short, such as physical addresses n, n+1, and n+2 shown in Table 1. A flash memory needs to be erased before data can be rewritten; and in the flash memory, a read/write operation is performed in a unit of page, and an erase operation is performed in a unit of block (which includes multiple pages). As a result, a mapping relationship between an LBA and a PBA in the SSD is not constant. Therefore, a flash translation layer (Flash translation layer, FTL) is needed to be responsible for conversion between an LBA and a PBA. An FTL algorithm is a mapping relationship between an LBA and a PBA. In the SSD, the FTL manages the flash memory by using a mapping table between an LBA and a PBA. When data in the flash memory needs to be updated, the FTL writes an updated new value of the data into blank flash memory space (which corresponds to a new PBA), and then updates a mapping relationship between an LBA and a PBA of the data, so that the LBA of the data points to the new PBA. A specific example is used for description. Assuming that data is initially written into the flash memory, a logical address of the data is a page 0 shown in Table 1, and a physical address of the data is a physical address n in Table 1, a mapping relationship between the LBA and the PBA of the data is that the page 0 points to the physical address n (as shown by the entry shown in the third row in Table 1). Then, the data needs to be updated. Because of the COW characteristic of the SSD, an updated new value of the data is written into other blank flash memory space. Assuming that a physical address corresponding to the flash memory space into which the new value is written is a physical address (n+1) shown in Table 1, the FTL updates the mapping relationship between the LBA and the PBA of the data to the following: The page 0 points to the physical address (n+1). In this way, the data is updated (that is, an assigned value of the data is the new value).

**Table 1**

| Flash translation layer (FTL) | |
|---|---|
| Physical address (PBA) | Logical address (LBA) |
| n (data) | Page 0 |
| n+1 (updated data) | Page 0 |

It is assumed that a database includes data X, a logical address LBA of the data X is a page 0 shown in the third row of Table 2, a physical address PBA of the data X in an SSD is n shown in the third row of Table 2, an assigned value of the data X is a, a is stored in flash memory space corresponding to the physical address n, and a mapping relationship between the LBA and the PBA of the data X is that the page 0 points to the physical address n. It is assumed that a transaction T performs a modification operation on the data X in the database, to change the old value a of the data X to a new value b. Because of the copy on write characteristic of the SSD, the new value b of the data X is written into blank flash memory space. Assuming that a physical address corresponding to the flash memory space into which the new value b is written is a physical address (n+1) shown in the fourth row of Table 2, the FTL updates the mapping relationship between the LBA and the PBA of the data X to the following: The page 0 points to the physical address (n+1). The data X is changed to the new value b. Assuming that a fault occurs in a system, and the transaction T fails to be committed before the fault occurs, undo (UNDO) processing needs to be performed on the transaction T.

In a conventional database recovery technology, a log record used to describe a modification operation of the transaction T includes the following content: a "transaction identifier of the transaction T", an "operation object X of the transaction T", an "old value a of pre-update data", and a "new value b of post-update data". When the undo processing is performed on the transaction T, it is equivalent that a reverse operation is performed on the modification operation of the transaction T, that is, the data X is changed to the "old value a of the pre-update data" in the log record. Because of the copy on write characteristic of the SSD, the "old value a of the pre-update data" is written into blank flash memory space. Assuming that a physical address corresponding to the flash memory space into which the "old value a of the pre-update data" is written is a physical address (n+2) shown in the fifth row of Table 2, the FTL updates the mapping relationship between the LBA and the PBA of the data X to the following: The page 0 points to the physical address (n+2). The data X is changed to the old value a. In this case, by using the undo (UNDO) processing, the data X in the database is restored to a state before the data X is modified by the transaction T.

However, it may be learned from Table 2 that the same assigned value "a" of the data X is separately written into two pieces of storage space in the flash memory. The write operation of writing the "old value a of the pre-update data" into the flash memory space corresponding to the physical address (n+2) is an unnecessary write operation, and is undesired in the flash memory.

If undo (UNDO) processing needs to be performed on many transactions, there may be a large quantity of unnecessary write operations such as the write operation shown in the fifth row of Table 2. The large quantity of unnecessary write operations may cause unnecessary erase operations, shortening a lifetime of the flash memory and further shortening a lifetime of the SSD.

In addition, in the conventional database recovery technology, if the SSD is used as the storage device, a write operation generally needs to be performed to complete undo (UNDO) processing of a transaction. This further reduces transaction recovery efficiency.

**Table 2**

| Flash translation layer (FTL) | |
|---|---|
| Physical address (PBA) | Logical address (LBA) |
| n (a) | Page0 (data X) |
| n+1 (b) | Page0 (data X) |
| n+2 (a) | Page0 (data X) |

For the foregoing problem, the embodiments of the present invention provide a transaction recovery method in a database system and a database management system, to effectively reduce write operations when undo (UNDO) processing is performed on a transaction if a storage device of the database system is a storage device (such as an SSD) supporting a copy on write characteristic. Therefore, erase operations on the storage device are reduced, thereby prolonging a lifetime of the storage device.

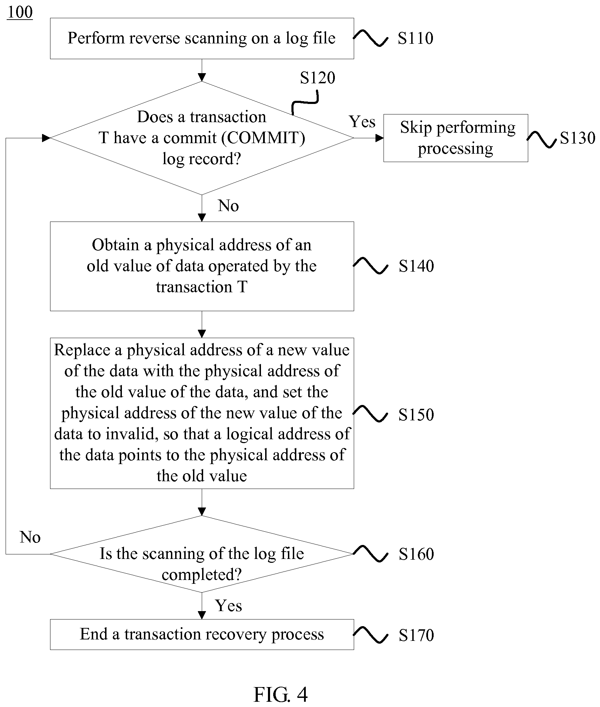

As shown in FIG. 4, an embodiment of the present invention provides a transaction recovery method 100 in a database system. A storage device of the database system supports a copy on write characteristic. The method 100 may be executed by a database management system in the database system. The method 100 includes the following steps.

S110. Perform reverse scanning on a log file, that is, scan log records backward starting from the end of the log file.

S120. In a scanning process, determine whether a transaction T is committed. If yes, go to S130; otherwise, go to S140.

Specifically, in the process of scanning the log file, whether the transaction T has a commit (Commit) log record is searched for. If yes, the transaction T is successfully committed. If no, the transaction T is not committed, but an update operation of the transaction T on a database may have been written into a disk. In this case, undo (UNDO) processing needs to be performed on the transaction T, to restore the database to a state before the transaction T is executed.

S130. Skip performing processing.

S140. Determine that the transaction T is not committed and that the transaction T needs to be recovered, where it is assumed that the transaction T has performed an update operation on data in a database; and obtain, from an update operation log used to record the update operation that is performed on the data by the to-be-recovered transaction T, a physical address of an old value of the data in the storage device, where the old value is a value of the data before the update operation, and the update operation log includes the physical address of the old value in the storage device.

S150. Replace a physical address of a new value of the data in the storage device with the physical address of the old value in the storage device, and set the physical address of the new value in the storage device to invalid, so that a logical address of the data points to the physical address of the old value in the storage device, where the new value is a value of the data after the update operation.

S160. Determine whether the scanning of the log file is completed. If yes, go to S170; if no, go to S120.

S170. End a transaction recovery process.

It should be understood that, in a flash memory, generally, a speed of a read operation is faster, a speed of a write operation is slightly slower, and a speed of an erase operation is the slowest. In a data structure based on the flash memory, write operations and erase operation should be reduced as far as possible. In this embodiment of the present invention, during transaction recovery, a physical address of a new value of data is replaced with a physical address of an old value of the data. This can reduce write operations, and further reduce erase operations on a flash memory, thereby prolonging a lifetime of the flash memory.

Therefore, in comparison with a conventional technology, in this embodiment of the present invention, write operations can be effectively reduced during transaction recovery. If the storage device is an SSD, erase operations on a flash memory can further be reduced, thereby prolonging a lifetime of the flash memory. In addition, transaction recovery efficiency can further be effectively improved because write operations are reduced.

It should be understood that the method in this embodiment of the present invention may be applied to a transaction failure recovery scenario, and may also be applied to an undo (UNDO) processing scenario in database system failure recovery.

A difference from the prior art in which a log record used to describe an update operation that is performed on data by a transaction records an old value of the data lies in that, in this embodiment of the present invention, a log record used to record an update operation that is performed on data by a transaction records a physical address of an old value in the storage device.

Optionally, in this embodiment of the present invention, before the log file is scanned, the method 100 further includes:
generating the update operation log according to the update operation that is performed on the data by the to-be-recovered transaction, where the update operation log includes a transaction identifier, an operation object, and a historical address, the transaction identifier is used to indicate the to-be-recovered transaction, the operation object is used to indicate the data operated by the to-be-recovered transaction, and the historical address is used to indicate the physical address of the old value in the storage device; and before the new value is written into the storage device, writing the update operation log into the storage device.

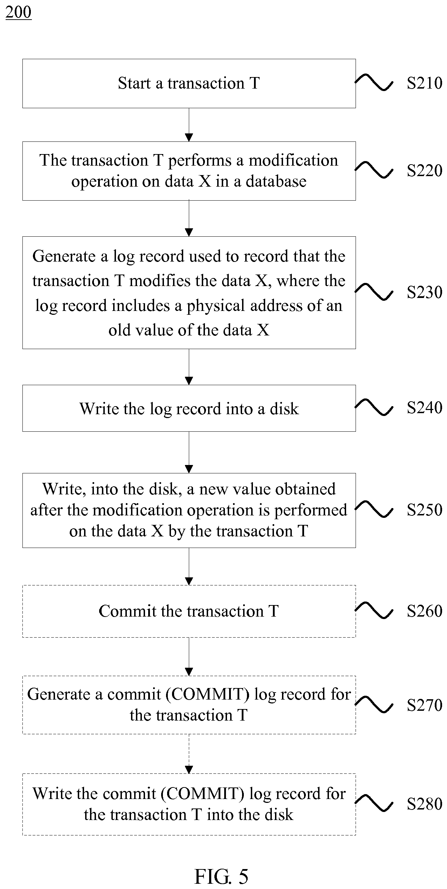

Specifically, FIG. 5 shows a schematic flowchart of a transaction log generation method 200 in a database system according to an embodiment of the present invention. A storage device of the database system supports a copy on write characteristic. The method 200 may be executed by a database management system. The method 200 includes the following steps:

S210. Start a transaction T.

S220. Execute the transaction T, to perform a modification operation on data in a database, and specifically, to change an old value of data X to a new value.

S230. Generate a log record used to record that the transaction T modifies the data X, where the log record includes a transaction identifier, an operation object, and a historical address, the transaction identifier is used to indicate the transaction T, the operation object is used to indicate the data X operated by the transaction, and the historical address is used to indicate a physical address of the old value of the data X in the storage device, the log record may further include the new value of the data X, the old value of the data X represents a value of the data X before the data X is modified by the transaction T, and the new value of the data X represents a value of the data X after the data X is modified by the transaction T.

S240. Write the log record generated in step S230 into a disk (that is, the storage device SSD of the database system).

S250. Write the new value of the data X into the disk (that is, the SSD). Step S240 needs to be performed before step S250.

S260. Commit the transaction T.

S270. Generate a commit (COMMIT) log record for the transaction T.

S280. Write the commit (COMMIT) log record generated for the transaction T in step S270 into the disk (that is, the SSD).

It is assumed that a fault occurs in the database system after step S250. As a result, the transaction T is terminated before running to a normal end point (that is step S280), that is, steps S260, S270, and S280 are not executed. However, before the fault occurs, an update operation of the transaction T on the database already takes effect, that is, the new value obtained after the transaction T modifies the data X is already written into the disk. In this case, the database is in an error state, and the transaction T needs to be recovered, that is, the transaction T needs to be undone (UNDO) according to the log record of the transaction T. As shown in FIG. 4, reverse scanning is performed on a log file to find the log record of the transaction T, and the transaction T is recovered according to the log record, to restore the database to a consistent state before the transaction T is executed.

In this embodiment of the present invention, in a process of generating a log record of a transaction, a physical address of an old value of data in the storage device is recorded in the log record of the transaction. Therefore, during transaction recovery, a physical address of a new value of the data is replaced with the physical address, recorded in the log record, of the old value of the data, to restore a database transaction to a state before the transaction is executed. Therefore, in comparison with a conventional technology, in this embodiment of the present invention, write operations can be effectively reduced during transaction recovery. If the storage device is the SSD, erase operations on a flash memory can further be reduced, thereby prolonging a lifetime of the flash memory. In addition, transaction recovery efficiency can further be effectively improved because write operations are reduced.

It should further be understood that, in FIG. 5, if the transaction T runs to the normal end point, that is, step S280 is successfully performed, the transaction T is successfully committed. Then, in step S120 in transaction recovery shown in FIG. 4, it is determined that the transaction T has a commit (COMMIT) log record, and no processing is performed (as described in step S130 in FIG. 4).

Optionally, in this embodiment of the present invention, the update operation that is performed on the data in the database by the transaction includes the following several cases:
Case 1: data modification (as shown in FIG. 5)
   The transaction T modifies a value of the data X. For example, an initial value of the data X is a (corresponding to the old value), the transaction T changes the value of the data X to b (corresponding to the new value). In this case, the old value a and the new value b of the data X are separately stored in the disk. The old value a of the data X has a corresponding physical address in the disk, and the new value b of the data X has a corresponding physical address in the disk.
Case 2: data insertion
   Before the transaction T is executed, the data X does not exist in the database. The transaction T is executed, and the transaction T inserts the data X into the database. In this case, the old value of the data X and the physical address of the old value are both null values. Correspondingly, an entry, used to record the physical address of the old value of the data X, in the log record is also a null entry.
Case 3: data deletion

Before the transaction T is executed, the data X exists in the database. The transaction T is executed, and the transaction T deletes the data X from the database. In this case, the new value of the data X and the physical address of the new value are both null values. Correspondingly, an entry, used to record the new value of the data X, in the log record is also a null entry.

Optionally, in this embodiment of the present invention, as shown in Table 3, an update operation log generated according to an update operation that is performed on data by a transaction includes:
a transaction identifier (T_ID), used to indicate the transaction, for example, an identifier used to store the transaction;
an operation object (Element), used to indicate the data operated by the transaction, where
optionally, the operation object may directly store a new value of the data operated by the transaction or a physical address of a new value of the data in a storage device; and
a historical address (PreAddress), used to indicate a physical address of an old value of the data operated by the transaction, where specifically, the historical address may directly store the physical address, of the old value of the data operated by the transaction, in the storage device.

**Table 3**

| 1 | Transaction identifier (T_ID) | Operation object (Element) | Historical address (PreAddress) |
|---|---|---|---|
| 2 | T1 | X | P(X') |
| 3 | T2 | A | P(A') |
| 4 | T4 | D | NULL |
| 5 | T4 | B | P(B') |
| 6 | T4 | B | Delete |
| 7 | T6 | C | P(C') |
| 8 | T2 | Y | P(Y') |
| 9 | T1 | X | P(X") |
| 10 | T1 | Commit | NULL |
| ... | ... | ... | ... |

It may be learned from Table 3 that content in a log record varies according to the foregoing three different cases in which a transaction performs an update operation on data in a database. In the foregoing three different cases, information stored in Element and information stored in PreAddress are separately described as follows:

In case 1 (data modification), a new value, obtained after a transaction modifies data, of the data is stored in Element, and a physical address of an old value of the data before the data is modified by the transaction is stored in PreAddress, as shown in the second, third, seventh, and eighth rows of Table 1.

In case 2 (data insertion), a new value, obtained after a transaction modifies data, of the data is stored in Element, and a physical address, stored in PreAddress, of an old value of the data is set to null, as shown in the fourth row of Table 2.

In case 3 (data deletion), when a record is updated (as shown in the fifth row of Table 2), a log is added, and a same transaction identifier and Element are used, but a delete flag is set for a physical address of an old value of data (as shown in the sixth row of Table 2).

In a process of performing transaction recovery based on log records shown in Table 3, for case 1 (as shown in the second, third, seventh, and eighth rows of Table 1), a physical address, stored in Element, of a new value of data is replaced with a physical address, stored in PreAddress, of an old value of the data. For case 2 (as shown in the fourth row of Table 2), a physical address of a new value of data may be directly set to null. For case 3 (as shown in the fifth and sixth rows of Table 2), recovery is performed according to record information of a log preceding a delete log (as shown in the sixth row of Table 2), and a recovery process is similar to that in case 1.

In this embodiment of the present invention, a commit (Commit) log record is shown in the tenth row of Table 3. A physical address of an old value is set to null, and a commit (Commit) flag is stored in Element.

Optionally, in this embodiment of the present invention, a mapping table that is between a logical address LBA and a physical address PBA and that is of a flash translation layer (Flash translation layer, FTL) of a storage system stores a physical address of an old value in the storage system.

It should be understood that, in a flash memory, an FTL is responsible for conversion between an LBA and a PBA. Specifically, the FTL implements conversion between an LBA and a PBA by maintaining and updating a mapping table between an LBA and a PBA (as shown in Table 1 or Table 2). Therefore, to enable the FTL to implement that a logical address (that is, an LBA) of data points to a physical address (that is, a PBA) of an old value of the data, the physical address of the old value of the data needs to be stored in the mapping table that is between the LBA and the PBA and that is maintained and updated by the FTL. In this way, it can be implemented, according to the physical address, recorded in a log, of the old value of the data, that the logical address (that is, the LBA) of the data points to the physical address (that is, the PBA) of the old value of the data, so as to restore the data to a state before the data is modified by a transaction.

It should be understood that the database management system periodically reclaims a log record of a committed transaction, and reclaims, by scanning a log file, a log of a transaction that has a commit (COMMIT) log record.

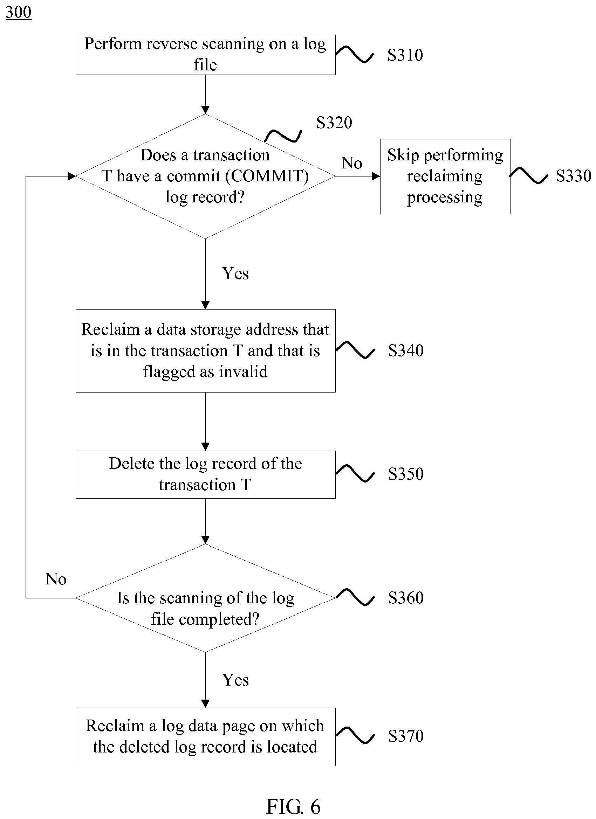

As shown in FIG. 6, an embodiment of the present invention further provides a transaction log reclaiming method 300 in a database system. A storage device of the database system supports a copy on write characteristic. The method 300 may be executed by a database management system. The method 300 includes the following steps:
S310. Perform reverse scanning on a log file, that is, scan logs one by one starting from the end of the log file.
S320. In a scanning process, determine whether a transaction T has a commit (COMMIT) log record. If no, go to S330; if yes, go to S340.
S330. When it is determined that the transaction T has no commit (COMMIT) log record, which is considered that the transaction T is not committed, skip performing log reclaiming processing on the transaction T.
S340. When it is determined that the transaction T has a commit (COMMIT) log record, which is considered that the transaction T is committed, reclaim a data storage address that is in the transaction T and that is flagged as invalid, for example, a data logical address and a data physical address.
S350. Delete the log record of the transaction T.
S360. Determine whether the scanning of the log file is completed. If yes, go to S370; if no, go to S320.
S370. Reclaim a log data page on which the deleted log record is located, for example, delete the log data page on which the log record of the transaction T is located. It should be understood that the log data page is log data written into a physical address.

In step S340, the data physical address that is in the transaction T and that is flagged as invalid is reclaimed. It should be understood that, in the prior art, in a log reclaiming process, physical storage space of all old values of data is reclaimed; however, in this embodiment of the present invention, only the data physical address flagged as invalid is reclaimed.

Optionally, in step S330 in this embodiment of the present invention, when it is determined that the transaction T is not committed, log page combining may be performed on the log record of the transaction T and a log record of another uncommitted transaction. For example, the log record of the transaction T is moved to a log data page on which the log record of the another uncommitted transaction is located.

It should be understood that transaction log reclaiming is a maintenance operation of the database system. In an actual application, a proper scheduling plan may be made according to a quantity of transactions of a database.

In this embodiment of the present invention, in a transaction recovery process, a physical address of a new value of the data is replaced with a physical address of an old value of the data. In addition, an index of the database also needs to be adjusted. It should be understood that the index of the database is a file of organizing data in a specific manner for purposes of convenient retrieval. Therefore, during database transaction recovery, the corresponding index also needs to be adjusted. The index of the database may be adjusted based on a current related technology, and details are not described herein.

In conclusion, in this embodiment of the present invention, the physical address of the new value of the data is replaced with the physical address of the old value of the data during transaction recovery, so that a logical address of the data points to the physical address of the old value of the data. In this way, the data is restored to the old value, that is, transaction recovery is implemented. In comparison with a conventional technology, in this embodiment of the present invention, write operations can be effectively reduced during transaction recovery. If the storage device is an SSD, erase operations on a flash memory can further be reduced, thereby prolonging a lifetime of the flash memory. In addition, transaction recovery efficiency can further be effectively improved because write operations are reduced.

For ease of understanding and description, the foregoing describes the methods in the embodiments of the present invention by using an example in which the storage device of the database system is an SSD. However, this is not limited in the embodiments of the present invention. Alternatively, the storage device of the database system may be another storage device supporting a copy on write (COW) characteristic. The storage device may be based on hardware, or may be based on software, for example, a file system.

The foregoing is described by using an example in which the SSD uses a flash memory as a storage medium. It should be understood that, alternatively, the SSD may use a dynamic random access memory (dynamic random access memory, DRAM) as a storage medium. This is not limited in the embodiments of the present invention.

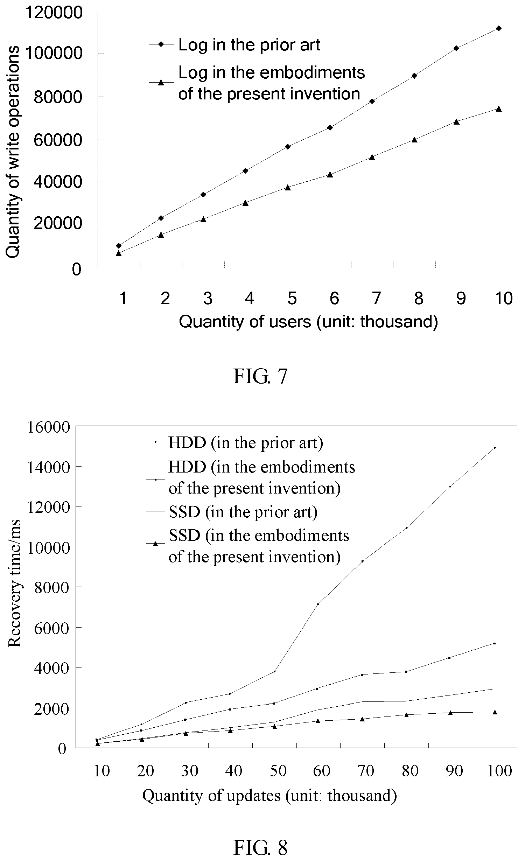

As shown in FIG. 7, under an equivalent condition, a quantity of write operations generated when transaction recovery is performed by using the method in the embodiments of the present invention is obviously less than a quantity of write operations generated when transaction recovery is performed by using a conventional database transaction recovery technology.

As shown in FIG. 8, if a storage device of a database is an SSD, under a condition in which quantities of update operations (Update Ops) are the same, a recovery time required for transaction recovery performed by using the method in the embodiments of the present invention is obviously less than a recovery time required for transaction recovery performed by using a conventional database transaction recovery technology. In FIG. 8, an HDD is a hard disk drive (Hard Disk Drive, HDD). If a storage device of a database is an HDD, under a condition in which quantities of update operations (Update Ops) are the same, a recovery time required for transaction recovery performed by using the method in the embodiments of the present invention is obviously less than a recovery time of a conventional database transaction recovery technology.

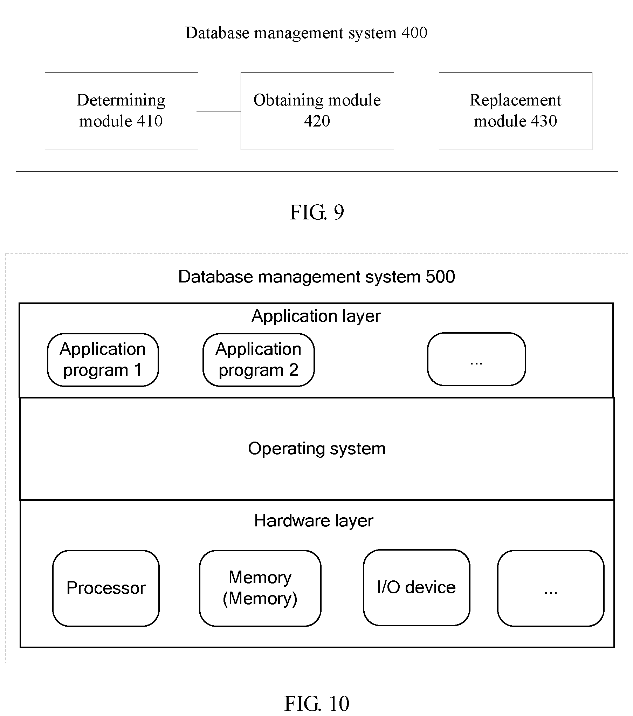

FIG. 9 shows a schematic block diagram of a database management system 400 according to an embodiment of the present invention. A storage device of a database system to which the database management system 400 belongs supports a copy on write characteristic. The database management system 400 includes:
a determining module 410, configured to determine a to-be-recovered transaction in the database system, where the to-be-recovered transaction is not committed, and the to-be-recovered transaction has performed an update operation on data in the database system;
an obtaining module 420, configured to obtain, from an update operation log used to record the update operation that is performed on the data by the to-be-recovered transaction determined by the determining module, a physical address of an old value of the data in the storage device, where the old value is a value of the data before the update operation; and
a replacement module 430, configured to replace a physical address of a new value of the data in the storage device with the physical address, obtained by the obtaining module, of the old value in the storage device, and set the physical address of the new value in the storage device to invalid, so that a logical address of the data points to the physical address of the old value in the storage device, where the new value is a value of the data after the update operation.

Optionally, in this embodiment of the present invention, the determining module 410, the obtaining module 420, and the replacement module 430 may be implemented by a processor or a processor-related circuit component in the database management system 400.

In the database management system provided in this embodiment of the present invention, during transaction recovery, the physical address of the new value of the data is replaced with the physical address of the old value of the data, so that the logical address of the data points to the physical address of the old value of the data. In this way, the data is restored to the old value, that is, transaction recovery is implemented. In comparison with a conventional technology, in this embodiment of the present invention, write operations can be effectively reduced during transaction recovery. If the storage device is an SSD, erase operations on a flash memory can further be reduced, thereby prolonging a lifetime of the flash memory. In addition, transaction recovery efficiency can further be effectively improved because write operations are reduced.

Optionally, in this embodiment of the present invention, the database management system 400 further includes:
a log generation module 440, configured to generate the update operation log according to the update operation that is performed on the data by the to-be-recovered transaction, where the update operation log includes a transaction identifier, an operation object, and a historical address, the transaction identifier is used to indicate the to-be-recovered transaction, the operation object is used to indicate the data operated by the to-be-recovered transaction, and the historical address is used to indicate the physical address of the old value in the storage device; and
a log writing module 450, configured to: before the new value is written into the storage device, write the update operation log into the storage device.

Specifically, the log generation module 440 and the log writing module 450 may be implemented by a processor or a processor-related circuit component in the database management system 400.

Optionally, in this embodiment of the present invention, a mapping table that is between a logical address LBA and a physical address PBA and that is of a flash translation layer of the storage device stores the physical address of the old value in the storage device.

Optionally, in this embodiment of the present invention, the update operation is an insertion operation, and the old value and the physical address of the old value in the storage device are null values; or
the update operation is a deletion operation, and the new value and the physical address of the new value in the storage device are null values.

It should be understood that the foregoing and other operations and/or functions of the modules in the database management system 400 according to this embodiment of the present invention are respectively used to implement corresponding procedures of the methods in FIG. 4 to FIG. 6. For brevity, details are not described herein again.

It should be noted that FIG. 10 is used as an example to describe a logical structure of a database management system 500 provided in an embodiment of the present invention. As shown in FIG. 10, a hardware layer of the database management system 500 includes a processor, such as a CPU, and certainly may further include a memory (Memory), an input/output device, a network interface, and the like. An operating system kernel, for example, a Linux Kernel and some drivers, runs on the hardware layer. In addition, the database management system further includes an application layer. The application layer includes an application program and the like.

It should be understood that the memory (Memory) shown in FIG. 10 is configured to temporarily store operational data of the processor shown in FIG. 10 and data exchanged with an external memory (for example, the storage device shown in FIG. 1) such as a hard disk.

The determining module 410, the obtaining module 420, and the replacement module 430 that are included in the database management system 400 provided in this embodiment of the present invention may be specifically implemented by the processor shown in FIG. 10.

It should be noted that, in an actual application, a product form of the database management system 500 in this embodiment of the present invention may be a computing node, or a functional module on a server. This is not limited in the present application.

It should be understood that the database management system 500 provided in this embodiment may perform the method provided in any one of the foregoing method embodiments. For a detailed process, refer to descriptions in the method embodiments. Details are not described herein again. In addition, the database management system 500 provided in this embodiment corresponds to the database management system 400 provided in the embodiment of the present invention.

In the database management system provided in this embodiment of the present invention, during transaction recovery, a physical address of a new value of data is replaced with a physical address of an old value of the data, so that a logical address of the data points to the physical address of the old value of the data. In this way, the data is restored to the old value, that is, transaction recovery is implemented. In comparison with a conventional technology, in this embodiment of the present invention, write operations can be effectively reduced during transaction recovery. If a storage device is an SSD, erase operations on a flash memory can further be reduced, thereby prolonging a lifetime of the flash memory. In addition, transaction recovery efficiency can further be effectively improved because write operations are reduced.

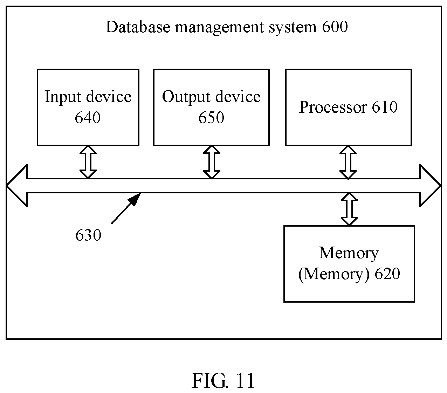

FIG. 11 shows a schematic block diagram of another database management system 600 according to an embodiment of the present invention. A storage device of a database system to which the database management system 600 belongs supports a copy on write characteristic. The database management system 600 may include a processor 610, a memory (Memory) 620, a bus system 630, an input device 640, and an output device 650.

The memory 620 may include a read-only memory and a random access memory, and provide instructions and data to the processor 610. Apart of the memory 620 may further include a non-volatile random access memory (NVRAM).

The memory 620 stores the following elements, an executable module or a data structures, or their subsets or their extended sets:
an operation instruction: including various operation instructions, which are used to implement various operations; and
an operating system, including various system programs, which are used to implement various basic services and process a hardware-based task.

In this embodiment of the present invention, the processor 610 performs the following operations by invoking operation instructions (where the operation instructions may be stored in the operating system) stored in the memory 620:
determining a to-be-recovered transaction in the database system, where the to-be-recovered transaction is not committed, and the to-be-recovered transaction has performed an update operation on data in the database system; obtaining, from an update operation log used to record the update operation that is performed on the data by the to-be-recovered transaction, a physical address of an old value of the data in the storage device, where the old value is a value of the data before the update operation; and replacing a physical address of a new value of the data in the storage device with the physical address of the old value in the storage device, and setting the physical address of the new value in the storage device to invalid, so that a logical address of the data points to the physical address of the old value in the storage device, where the new value is a value of the data after the update operation.

In the database management system provided in this embodiment of the present invention, during transaction recovery, the physical address of the new value of the data is replaced with the physical address of the old value of the data, so that the logical address of the data points to the physical address of the old value of the data. In this way, the data is restored to the old value, that is, transaction recovery is implemented. In comparison with a conventional technology, in this embodiment of the present invention, write operations can be effectively reduced during transaction recovery. If the storage device is an SSD, erase operations on the SSD can further be reduced, thereby prolonging a lifetime of the SSD. In addition, transaction recovery efficiency can further be effectively improved because write operations are reduced.

The processor 610 may also be referred to as a CPU (Central Processing Unit, central processing unit). The memory 620 may include a read-only memory and a random access memory, and provide an instruction and data to the processor 610. A part of the memory 620 may further include a non-volatile random access memory (NVRAM). In specific application, the components of the database management system 600 are coupled by using the bus system 630. In addition to a data bus, the bus system 630 may further include a power bus, a control bus, a status signal bus, and the like. However, for clear description, various buses are all denoted as the bus system 630 in the figure.

The method disclosed in the foregoing embodiments of the present invention may be applied in the processor 610, or implemented by the processor 610. The processor 610 may be an integrated circuit chip having a signal processing capability. In an implementation process, the steps of the foregoing method may be completed by using an integrated logic circuit of hardware in the processor 610 or instructions in a form of software. The processor 610 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor 610 may implement or perform the methods, steps, and logical block diagrams disclosed in the embodiments of the present invention. The general purpose processor may be a microprocessor, or the processor may be any conventional processor or the like. The steps of the methods disclosed with reference to the embodiments of the present invention may be directly performed and completed by a hardware decoding processor, or performed and completed by a combination of hardware and software modules in the decoding processor. The software module may be located in a mature storage medium in the art, such as a random memory, a flash memory, a read-only memory, a programmable read-only memory or an electrically erasable programmable memory, or a register. The storage medium is located in the memory 620, and the processor 610 reads information in the memory 620 and completes the steps of the foregoing methods in combination with hardware of the processor 610.

Optionally, in this embodiment of the present invention, the processor 610 is specifically configured to: generate the update operation log according to the update operation that is performed on the data by the to-be-recovered transaction, where the update operation log includes a transaction identifier, an operation object, and a historical address, the transaction identifier is used to indicate the to-be-recovered transaction, the operation object is used to indicate the data operated by the to-be-recovered transaction, and the historical address is used to indicate the physical address of the old value in the storage device; and before the new value is written into the storage device, write the update operation log into the storage device.

Optionally, in this embodiment of the present invention, a mapping table that is between a logical address LBA and a physical address PBA and that is of a flash translation layer of the storage device stores the physical address of the old value in the storage device.

Optionally, in this embodiment of the present invention, the update operation is an insertion operation, and the old value and the physical address of the old value in the storage device are null values; or
the update operation is a deletion operation, and the new value and the physical address of the new value in the storage device are null values.

In the database management system provided in this embodiment of the present invention, during transaction recovery, the physical address of the new value of the data is replaced with the physical address of the old value of the data, so that the logical address of the data points to the physical address of the old value of the data. In this way, the data is restored to the old value, that is, transaction recovery is implemented. In comparison with a conventional technology, in this embodiment of the present invention, write operations can be effectively reduced during transaction recovery. Erase operations on the storage device can further be reduced, thereby prolonging a lifetime of the storage device. In addition, transaction recovery efficiency can further be effectively improved because write operations are reduced.

It should be understood that the database management system 600 according to this embodiment of the present invention may correspond to an execution body of the transaction recovery method in the database system in the embodiments of the present invention, and may correspond to the database management system 400 and the database management system 500 according to the embodiments of the present invention. In addition, the foregoing and other operations and/or functions of the modules in the database management system 600 are respectively used to implement corresponding procedures of the methods in FIG. 4 to FIG. 6. For brevity, details are not described herein again.

It should be understood that sequence numbers of the foregoing processes do not mean execution sequences in the embodiments of the present application. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present application. The foregoing storage medium includes: any medium that can store program code, such as a USB flash drive, a removable hard disk, a read-only memory (Read-Only Memory, ROM), a random access memory (Random Access Memory, RAM), a disk, or an optical disc.

The foregoing descriptions are merely specific implementations of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A transaction recovery method in a database system, wherein a storage device of the database system supports a copy on write characteristic, and the method comprises:
determining a to-be-recovered transaction in the database system, wherein the to-be-recovered transaction is not committed, and the to-be-recovered transaction has performed an update operation on data in the database system;
obtaining, from an update operation log used to record the update operation that is performed on the data by the to-be-recovered transaction, a physical address of an old value of the data in the storage device, wherein the old value is a value of the data before the update operation; and
replacing a physical address of a new value of the data in the storage device with the physical address of the old value in the storage device, and setting the physical address of the new value in the storage device to invalid, so that a logical address of the data points to the physical address of the old value in the storage device, wherein the new value is a value of the data after the update operation.

2. The method according to claim 1, wherein before the determining a to-be-recovered transaction in the database system, the method further comprises:
generating the update operation log according to the update operation that is performed on the data by the to-be-recovered transaction, wherein the update operation log comprises a transaction identifier, an operation object, and a historical address, the transaction identifier is used to indicate the to-be-recovered transaction, the operation object is used to indicate the data operated by the to-be-recovered transaction, and the historical address is used to indicate the physical address of the old value in the storage device; and
before the new value is written into the storage device, writing the update operation log into the storage device.

3. The method according to claim 1 or 2, wherein the storage device is a solid state disk that uses a flash memory as a storage medium, and a mapping table that is between a logical address LBA and a physical address PBA and that is of a flash translation layer of the storage device stores the physical address of the old value in the storage device.

4. The method according to any one of claims 1 to 3, wherein the update operation is an insertion operation, and the old value and the physical address of the old value in the storage device are null values; or
the update operation is a deletion operation, and the new value and the physical address of the new value in the storage device are null values.

5. A database management system, wherein a storage device of a database system to which the database management system belongs supports a copy on write characteristic, and the database management system comprises:
a determining module, configured to determine a to-be-recovered transaction in the database system, wherein the to-be-recovered transaction is not committed, and the to-be-recovered transaction has performed an update operation on data in the database system;
an obtaining module, configured to obtain, from an update operation log used to record the update operation that is performed on the data by the to-be-recovered transaction determined by the determining module, a physical address of an old value of the data in the storage device, wherein the old value is a value of the data before the update operation; and
a replacement module, configured to replace a physical address of a new value of the data in the storage device with the physical address, obtained by the obtaining module, of the old value in the storage device, and set the physical address of the new value in the storage device to invalid, so that a logical address of the data points to the physical address of the old value in the storage device, wherein the new value is a value of the data after the update operation.

6. The database management system according to claim 5, wherein the database management system further comprises:
a log generation module, configured to generate the update operation log according to the update operation that is performed on the data by the to-be-recovered transaction, wherein the update operation log comprises a transaction identifier, an operation object, and a historical address, the transaction identifier is used to indicate the to-be-recovered transaction, the operation object is used to indicate the data operated by the to-be-recovered transaction, and the historical address is used to indicate the physical address of the old value in the storage device; and
a log writing module, configured to: before the new value is written into the storage device, write the update operation log into the storage device.

7. The database management system according to claim 5 or 6, wherein the storage device is a solid state disk that uses a flash memory as a storage medium, and a mapping table that is between a logical address LBA and a physical address PBA and that is of a flash translation layer of the storage device stores the physical address of the old value in the storage device.

8. The database management system according to any one of claims 5 to 7, wherein the update operation is an insertion operation, and the old value and the physical address of the old value in the storage device are null values; or
the update operation is a deletion operation, and the new value and the physical address of the new value in the storage device are null values.

9. A database management system, wherein a storage device of a database system to which the database management system belongs supports a copy on write characteristic, the database management system comprises a memory and a processor, the memory is configured to store instructions, the processor is configured to execute the instructions stored in the memory, and by executing the instructions stored in the memory, the processor is configured to:
determine a to-be-recovered transaction in the database system, wherein the to-be-recovered transaction is not committed, and the to-be-recovered transaction has performed an update operation on data in the database system;
obtain, from an update operation log used to record the update operation that is performed on the data by the to-be-recovered transaction, a physical address of an old value of the data in the storage device, wherein the old value is a value of the data before the update operation; and
replace a physical address of a new value of the data in the storage device with the physical address of the old value in the storage device, and set the physical address of the new value in the storage device to invalid, so that a logical address of the data points to the physical address of the old value in the storage device, wherein the new value is a value of the data after the update operation.

10. The database management system according to claim 9, wherein the processor is further configured to: generate the update operation log according to the update operation that is performed on the data by the to-be-recovered transaction, wherein the update operation log comprises a transaction identifier, an operation object, and a historical address, the transaction identifier is used to indicate the to-be-recovered transaction, the operation object is used to indicate the data operated by the to-be-recovered transaction, and the historical address is used to indicate the physical address of the old value in the storage device; and before the new value is written into the storage device, write the update operation log into the storage device.

11. The database management system according to claim 9 or 10, wherein the storage device is a solid state disk that uses a flash memory as a storage medium, and a mapping table that is between a logical address LBA and a physical address PBA and that is of a flash translation layer of the storage device stores the physical address of the old value in the storage device.

12. The database management system according to any one of claims 9 to 11, wherein the update operation is an insertion operation, and the old value and the physical address of the old value in the storage device are null values; or
the update operation is a deletion operation, and the new value and the physical address of the new value in the storage device are null values.
